# EUROPÄISCHE PATENTSCHRIFT

(11) **EP 3 446 819 B1**
(45) Veröffentlichungstag und Bekanntmachung des Hinweises auf die Patenterteilung: **05.08.2020**
(21) Anmeldenummer: 18180339.6
(22) Anmeldetag: 28.06.2018
(51) Int. Cl.: B23D 63/12, B24B 27/06, B24B 53/013, B24B 53/06, B24D 5/06, B24D 5/12, B24D 7/06

(54) **VERFAHREN ZUM SCHÄRFEN EINES WERKZEUGS UND KOMBINATION AUS EINEM FORMTEIL UND EINEM WERKZEUG FÜR EIN DERARTIGES VERFAHREN**
METHOD FOR SHARPENING A TOOL AND COMBINATION OF A FORM PART AND A TOOL FOR SUCH A METHOD
PROCÉDÉ D'AFFÛTAGE D'UN OUTIL ET COMBINAISON D'UNE PIÈCE DE FORME ET D'UN OUTIL POUR UN TEL PROCÉDÉ

(30) Priorität: 23.08.2017 DE 102017214760
(43) Veröffentlichungstag der Anmeldung: 27.02.2019
(73) Patentinhaber: Bucar, Reinhard, 90427 Nürnberg (DE)
(72) Erfinder: Bucar, Reinhard, 90427 Nürnberg (DE)
(74) Vertreter: Rau, Schneck & Hübner Patentanwälte Rechtsanwälte PartGmbB

(56) Entgegenhaltungen:
- EP-B1- 1 428 623
- DE-U1- 20 311 567
- GB-A- 1 583 860

## Beschreibung

Die vorliegende Patentanmeldung nimmt die Priorität der deutschen Patentanmeldung DE 10 2017 214 760.1 in Anspruch.

Die Erfindung betrifft ein Verfahren zum Schärfen eines Werkzeugs sowie ein Werkzeug mit einem Formteil für ein derartiges Verfahren.

Bei der zerspanenden Bearbeitung eines Grundmaterials wie beispielsweise beim Betonbohren wird die Schneide eines Werkzeugs abgenutzt. Das Werkzeug wird stumpf. Für eine weitere Materialbearbeitung ist es erforderlich, das Werkzeug nach zu schärfen. Zum Nachschärfen von Beton-Bohrkronen werden Schärfplatten verwendet, die beispielsweise in DE 40 27 821 A1 in Form von Hülsenböden eines Transportbehälters bekannt sind. Das Werkzeug zerspant die Schärfplatte, die aus einem Schärfmaterial hergestellt ist, wodurch die Schneiden des Werkzeugs nachgeschärft werden. Die Verwendung von Schärfplatten ist aufwendig und führt zu einer längeren Unterbrechung der Materialbearbeitung. Das Nachschärfen des Werkzeugs an der Schärfplatte ist ineffizient, da Teile der Schärfplatte ausbrechen und für das Nachschärfen nicht nutzbar sind. Die Materialausbeute des Schärfmaterials ist eingeschränkt.

Aus der EP 1 428 623 B1, die ein Verfahren nach dem Oberbegriff des Anspruchs 1 und eine Kombination aus mindestens einem Formteil und einem Werkzeug nach dem Oberbegriff des Anspruchs 6 offenbart, ist ein Schärfmittel für Bohrkronen bekannt, das strangförmig ausgebildet ist und in einen Kreisringspalt einlegbar ist.

Die DE 602 08 602 T2 offenbart ein Schleifmittel, das partikelförmig durch die Bohrkrone der Bearbeitungsoberfläche zugeführt wird.

Weitere Bohrkronen mit Schneidelementen aus einem Schleifmaterial sind bekannt aus der GB 1 583 860 A und aus der DE 203 11 567 U1.

Der Erfindung liegt die Aufgabe zugrunde, das Schärfen eines Werkzeugs zu verbessern, insbesondere unkomplizierter und effizienter zu gestalten.

Die Aufgabe wird durch die Merkmale der Ansprüche 1 und 6 gelöst. Der Kern der Erfindung besteht darin, dass an einer Bearbeitungsoberfläche eines Grundmaterials, die mit einem Werkzeug bearbeitet wird, ein Formteil aus einem Schärfmaterial angeordnet wird. Das Formteil wird auch als Schärf-Formteil bezeichnet. Bei der Fortsetzung der Bearbeitung wird das Formteil durch das Werkzeug zerspant und dadurch das Werkzeug, insbesondere automatisch und insbesondere selbsttätig, geschärft. Das Werkzeug kann stationär oder mobil ausgeführt sein. Das Selbstschärfen des Werkzeugs ist vereinfacht. Eine separate Schärfplatte ist entbehrlich. Die Materialausbeute des Schärfmaterials ist erhöht, da das Formteil zum Nachschärfen des Werkzeugs vollständig zerspant wird. Ein Materialverlust tritt nicht auf. Dadurch, dass der Schärfvorgang unmittelbar am Grundmaterial stattfindet, ist die Ausfallzeit des Werkzeugs reduziert. Ein Werkzeugwechsel kann vermieden werden. Die Auslastung des Werkzeugs ist erhöht. Die Wirtschaftlichkeit einer Materialbearbeitung ist erhöht.

Das Werkzeug ist insbesondere ein Trennwerkzeug, insbesondere zur spanenden Bearbeitung eines Grundmaterials. Werkzeuge sind beispielweise Diamantwerkzeuge oder ähnliches, insbesondere diamantbesetzte Bohrkronen, Hohl-Bohrer und/oder Voll-Bohrer für alle gängigen Bohrdurchmesser. Das Werkzeug dient insbesondere zum Trockenbohren in steinbasiertem Material, insbesondere Beton, Stahlbeton, Mauerwerk, Asphalt oder dergleichen, und/oder in metallbasiertem Material, insbesondere Stahl, Eisen oder dergleichen. Das Werkzeug kann auch zum Nass-Bohren in den genannten Materialien verwendet werden.

Das Werkzeug kann scheibenförmig ausgeführt sein, insbesondere als diamantbesetztes Sägeblatt oder Wandsägeblatt oder Fugenschneidblatt für Baustellensägen, Tischsägen oder dergleichen, als Trennscheibe für alle Werkstoffe, insbesondere Stein, verschiedene Betonarten, Glas, Metall oder dergleichen. Das scheibenförmige Werkzeug ist insbesondere in einem der gängigen Blattdurchmesser ausgeführt.

Das Werkzeug kann auch eine Schleif- oder Polierscheibe sein, die keramikgebunden, metallgebunden und/oder harzgebunden ist.

Das Werkzeug kann auch linienartig ausgeführt sein als diamantbesetztes Seil, Schwert- oder Kettensäge oder dergleichen für Beton, Stahlbeton und andere steinbasierte Materialien oder Metallwerkstoffen, insbesondere Stahl, Eisen oder dergleichen. Das Werkzeug kann auch eine Granitsäge oder Gattersäge sein, die zur Bearbeitung von Gestein und/oder Holz verwendet wird.

Eine Kettensäge kann zur Bearbeitung von Holz- oder Kunststoffmaterial dienen.

Ein Werkzeug kann auch eine Scheibe, insbesondere eine Scheibe mit Diamantwerkzeugen zum Polieren und/oder Schleifen sein.

Das Werkzeug kann auch ein Räumwerkzeug sein. Das Werkzeug kann zur Bodenbearbeitung in Stahlbeton oder ähnlichem Material verwendet werden.

Ein Verfahren, bei dem ein Erzeugen einer Vertiefung in dem Grundmaterial mit dem Werkzeug entlang einer Vertiefungsrichtung, ein Entnehmen des Werkzeugs aus der Vertiefung, ein Einsetzen des mindestens einen Formteils in die Vertiefung sowie ein Wiedereinführen des Werkzeugs in die Vertiefung erfolgt, ermöglicht eine erhöhte Prozesssicherheit. Das Formteil ist insbesondere derart an dem Werkzeug angebracht, dass das Formteil in Längsrichtung des Werkzeugs, also entlang einer Vertiefungsrichtung, zumindest bereichsweise axial und/oder radial an dem Werkzeug vorsteht. Vorteilhaft ist es, wenn das Formteil axial an dem Werkzeug vorsteht. Das Formteil dient insbesondere zum Nachschärfen der Stirnflächen des Werkzeugs, insbesondere der Stirnflächen der Schneiden des Werkzeugs.

Mit dem Werkzeug wird eine Vertiefung in dem Grundmaterial erzeugt. Die Vertiefung erstreckt sich entlang einer Vertiefungsrichtung. Das mindestens eine Formteil wird, zusammen mit dem Werkzeug, unmittelbar in die Vertiefung eingesetzt. Nach dem Wiedereinführen des Werkzeugs und durch die Fortsetzung der Bearbeitung wird das Formteil in der Vertiefung zerspant. Das Nachschärfen des Werkzeugs ist verbessert. Eine unmittelbare Fixierung des Formteils ist entbehrlich, da das Formteil in der Vertiefung gehalten ist. Insbesondere ist das Formteil in der Vertiefung selbst gehalten. Der Schärfvorgang findet unmittelbar in der Vertiefung statt. Das Verfahren ist fehlerunanfällig.

Die Anbringung des Formteils am Werkzeug vor dem Einsetzen in die Vertiefung gewährleistet einen definierten Schärfprozess. Das Formteil kann in axialer Richtung am Werkzeug vorstehen. Das Formteil wird mit dem Werkzeug gemeinsam und definiert in die Vertiefung eingeführt. Das Formteil ist bezüglich des Werkzeugs definiert positioniert.

Ein Verfahren gemäß Anspruch 2 ermöglicht eine unkomplizierte Zerspanung.

Eine Vertiefung gemäß Anspruch 3 ermöglicht das unmittelbare Einsetzen des Formteils. Eine nutförmige Querschnittfläche der Vertiefung wird beispielsweise durch eine Säge, eine Kette oder ein Seil erzeugt. Eine kreisförmige Vertiefung wird durch einen Vollbohrer erzeugt. Eine ringförmige Vertiefung wird mittels einer Bohrkrone erzeugt.

Ein Werkzeug gemäß Anspruch 4 ist vorteilhaft nachschärfbar.

Vorteilhaft ist es, wenn das Formteil am Werkzeug gemäß Anspruch 5 vor dem Einsetzen in die Vertiefung befestigt ist. Die Befestigung kann eine Fixierung beispielsweise durch Kleben sein. Die Befestigung des Formteils am Werkzeug kann auch durch Aufstecken, Aufklipsen, Anklipsen, Verrasten und/oder Einspannen, insbesondere in Umfangsrichtung an einer Bohrkrone, erfolgen.

Beispielsweise kann das Formteil Vorsprünge aufweisen, die korrespondierend zu den Ausbrüchen der Bohrkrone ausgeführt sind, so dass das Formteil in mindestens einem Ausbruch des Werkzeugs, insbesondere in Umfangsrichtung, also tangential, an dem Werkzeug fixiert ist. Zusätzlich oder alternativ kann das Formteil klammerartige Vorsprünge aufweisen, die an der Schneide des Werkzeugs eine klemmende Halterung des Formteils bewirken. Insbesondere kann das Formteil derart ausgeführt sein, dass es einen an dem Werkzeug axial vorstehenden Abschnitt aufweist, wobei dieser Abschnitt als Hohlzylinder ausgeführt ist, der insbesondere einen identischen Durchmesser wie das Werkzeug selbst aufweist, also identischen Innendurchmesser und identischen Außendurchmesser.

Vorteilhaft bei einem Verfahren gemäß Anspruch 5 ist, dass das Formteil insbesondere auch bei Überkopf-Vertiefungen genutzt werden kann. Eine Überkopf-Vertiefung ist dann gegeben, wenn eine Vertiefungsrichtung zumindest anteilig vertikal nach oben und insbesondere ausschließlich vertikal nach oben gerichtet ist. Bohrmehl kann entgegen der Vertiefungsrichtung in Folge der Schwerkraft aus der Vertiefung entweichen.

Das Einsetzen eines Formteils unmittelbar in die Vertiefung gemäß einer nicht erfindungsgemäßen Ausführung ist unkompliziert möglich. Das Formteil kann schnell und fehlerunanfällig in die Vertiefung eingesetzt werden. Vorteilhaft ist es, wenn das Formteil derart ausgeführt ist, dass es in der Vertiefung geklemmt ist. Ein unbeabsichtigtes Verrutschen, insbesondere ein Herausfallen des Formteils aus der Vertiefung, ist verhindert.

Ein Werkzeug mit mindestens einem Formteil gemäß Anspruch 6 vereinfacht das erfindungsgemäße Verfahren. Dadurch, dass das Formteil Schärfmaterial aufweist und insbesondere aus einem Schärfmaterial besteht, ist ein automatisches Nachschärfen des Werkzeugs während der Materialbearbeitung in der Vertiefung sichergestellt.

Das Formteil gemäß Anspruch 6 gewährleistet insbesondere das zuverlässige Nachschärfen unterschiedlicher Werkzeugmaterialien. Siliziumcarbid (SiC) und/oder Korund oder dergleichen sind zum Schärfen von diamantbesetzten Schneiden geeignet.

Ein Formteil gemäß Anspruch 7 ist besonders geeignet für eine ringförmige Vertiefung, die insbesondere durch eine Bohrkrone erzeugt wird. Es können Formteil-Sets mit Hohlzylindern oder Zylinderschalensegmenten unterschiedlicher Durchmesser bereitgestellt werden, die an die Durchmesser der Bohrkronen angepasst sind. Zylinderschalensegment-Formteile können unmittelbar an dem Werkzeug befestigt, insbesondere angeklebt, gesteckt, gespannt, geklickt oder angeschweißt werden. Die Zylinderschalensegmente sind insbesondere als Halbschalen, also mit einem Öffnungswinkel von 180° bezüglich der Zylinderlängsachse ausgeführt. Es sind auch andere Öffnungswinkel, insbesondere 120° oder 90° möglich.

Ein Formteil gemäß Anspruch 8 ermöglicht eine vorteilhafte Anbringung am Werkzeug und/oder in der Vertiefung. Ein kegelförmiges oder kegelstumpfförmiges Formteil kann in der Form eines Fingerhuts ausgeführt sein und unmittelbar auf einen Bohrer aufgesetzt werden. Ein keilförmiges Formteil kann unmittelbar in die Vertiefung eingesetzt werden, wobei aufgrund der Keilform eine Selbstklemmung des Formteils in der Vertiefung gewährleistet ist. Stab- oder stäbchenförmige Formteile können entlang des Umfangs einer ringförmigen Vertiefung eingesetzt werden. Die stab- oder stäbchenförmigen Formelemente können auch in eine Vertiefung mit kreisförmiger oder nutförmiger Querschnittfläche eingesetzt werden.

Die Formteile können auch plattenförmig ausgeführt sein. Vorteilhaft ist es möglich, die Formteile, insbesondere die plattenförmigen Formteile als brechbare Plättchen einer Tafel zur Verfügung zu stellen, ähnlich einer Schokoladentafel. Zwischen zwei benachbarten Plättchen kann eine Sollbruchkerbe vorgesehen sein. Bei Bedarf kann ein Plättchen von der Tafel gebrochen werden.

Weitere vorteilhafte Ausgestaltungen, zusätzliche Merkmale und Einzelheiten der Erfindung ergeben sich aus der nachfolgenden Beschreibung von Ausführungsbeispielen anhand der Zeichnung. Es zeigen:
- Fig. 1: eine Schnittdarstellung einer Anordnung mit einem Werkzeug gemäß Schnittlinie I - I in Fig. 7 und einem Grundmaterial vor Beginn der Materialbearbeitung,
- Fig. 2: eine Fig. 1 entsprechende Darstellung nach der Erzeugung einer Vertiefung in dem Grundmaterial,
- Fig. 3: eine Fig. 2 entsprechende Darstellung nach dem Entnehmen des Werkzeugs aus der Vertiefung,
- Fig. 4: eine Fig. 3 entsprechende Darstellung mit an dem Werkzeug angebrachten Formteilen,
- Fig. 5: eine Fig. 4 entsprechende Darstellung mit dem in die Vertiefung wieder eingesetzten Werkzeug,
- Fig. 6: eine Fig. 5 entsprechende Darstellung nach einer Fortsetzung des Zerspanens,
- Fig. 7: eine perspektivische Darstellung des Werkzeugs in Form einer Bohrkrone,
- Fig. 8: eine Draufsicht der ringförmigen Vertiefung gemäß Fig. 6 mit eingesetzten Formteilen gemäß einer nicht erfindungsgemäßen Ausführungsform,
- Fig. 9: eine Schnittdarstellung einer Vertiefung mit nutförmiger Querschnittsfläche mit eingesetztem, keilförmigem Formteil gemäß einer nicht erfindungsgemäßen Ausführungsform,
- Fig. 10: eine Fig. 9 entsprechende Schnittdarstellung einer Vertiefung mit kreisförmiger Querschnittsfläche und einem fingerhutförmigen Formteil auf einem Vollbohrer gemäß einer weiteren Ausführungsform.

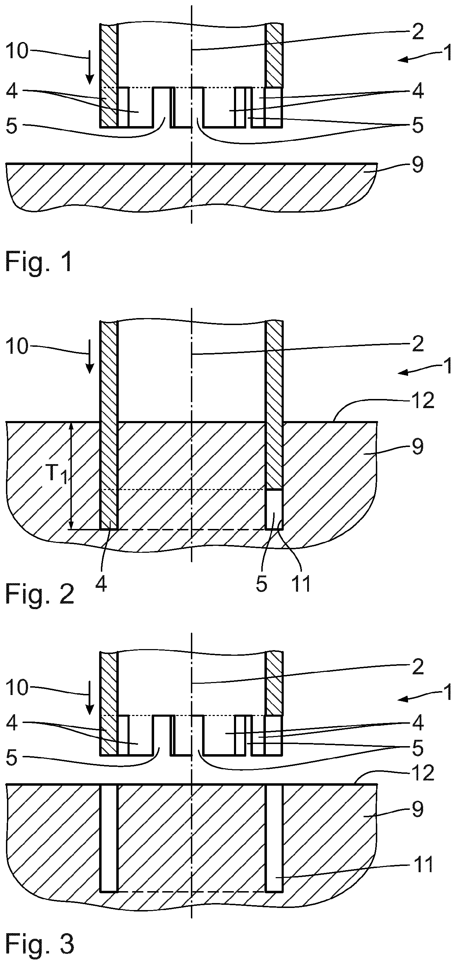

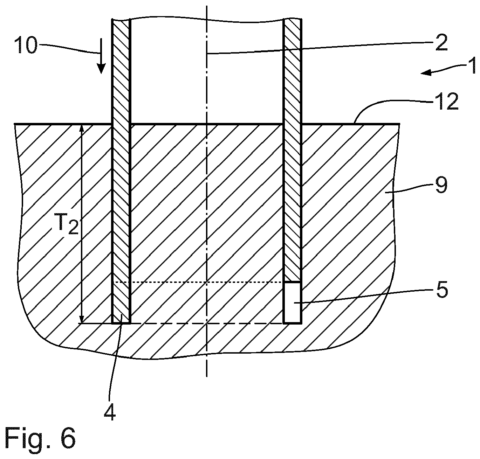

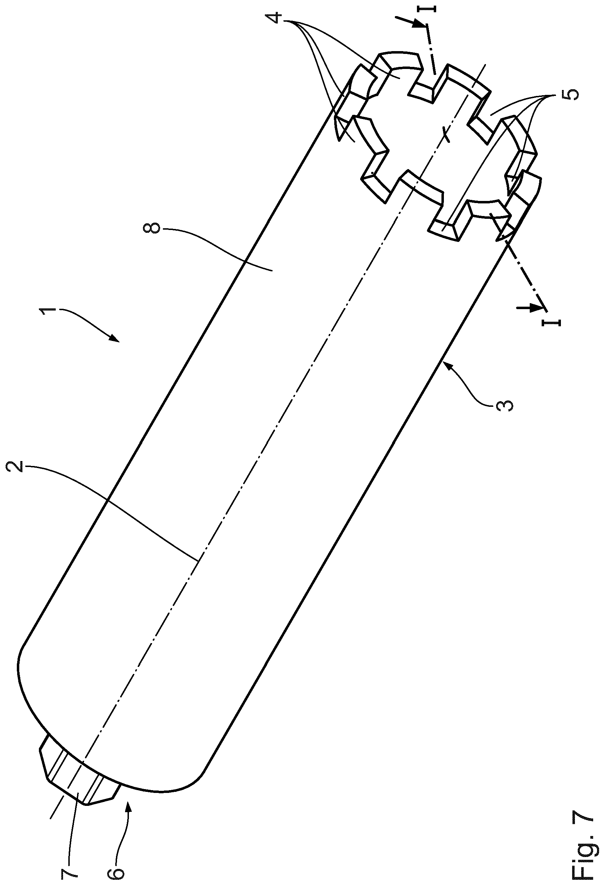

Nachfolgend wird anhand der Fig. 1 bis 7 ein Werkzeug 1 und ein Verfahren zum Schärfen des Werkzeugs 1 näher erläutert. Das Werkzeug 1 ist im Wesentlichen hohlzylindrisch bezüglich einer Werkzeuglängsachse 2 ausgeführt. Das Werkzeug 1 ist eine Bohrkrone, die insbesondere für das Trocken- oder Nassbohren von Beton eingesetzt werden kann.

An einer vorderen Bearbeitungs-Stirnfläche 3 weist das Werkzeug 1 mehrere, gemäß dem gezeigten Ausführungsbeispiel acht zylinderschalensegmentförmige Schneiden 4 auf. Die Schneiden 4 sind entlang des Umfangs des Werkzeugs 1 gleich beabstandet zueinander angeordnet. Jeweils zwei Schneiden 4 sind bezüglich der Werkzeuglängsachse 2 diametral gegenüberliegend zueinander angeordnet. Die Schneiden 4 sind stirnseitig, an ihrer Innenfläche und/oder an ihrer Außenfläche diamantbesetzt, um die Zerspanung des Grundmaterials 9 zu verbessern. Jeweils zwischen zwei benachbarten Schneiden 4 ist ein Ausbruch 5 vorgesehen, um insbesondere Bohrmehl in das Innere der Bohrkrone zu fördern.

An einer der Bearbeitungs-Stirnfläche 3 gegenüberliegenden hinteren Stirnfläche 6 weist das Werkzeug 1 einen Drehmomentübertragungsfortsatz 7 auf. Der Drehmomentübertragungsfortsatz 7 weist in einer Ebene senkrecht zur Werkzeuglängsachse 2 eine unrunde Kontur, insbesondere eine unrunde Außenkontur, insbesondere einen Außensechskant auf, um ein Antriebsdrehmoment von der Werkzeugmaschine auf das Werkzeug 1 zu übertragen.

Das Werkzeug 1 weist einen hohlzylindrischen Grundkörper 8 auf. Die Schneiden 4 sind stirnseitig an der Bearbeitungsstirnfläche 3 einstückig mit dem Grundkörper 8 verbunden.

Nachfolgend wird anhand von Fig. 1 bis 6 ein Verfahren zum Schärfen des Werkzeugs 1 näher erläutert. Für die Schnittdarstellungen gemäß Fig. 1 bis 6 wurde eine an der Werkzeuglängsachse 2 abknickende Schnittebene gewählt, um sowohl die Schneide 4, als auch den Ausbruch 5 zu zeigen.

Das Werkzeug 1 wird, wie in Fig. 1 dargestellt, gegenüber dem zu bearbeitenden Grundmaterial 9 positioniert. Gemäß dem gezeigten Ausführungsbeispiel ist das Grundmaterial 9 Beton.

Das Werkzeug 1 wird bezüglich der Werkzeuglängsachse 2 gedreht und entlang einer Vertiefungsrichtung 10 relativ zu dem Grundmaterial 9 verlagert. Mittels der Schneiden 4 wird in dem Grundmaterial 9 eine Vertiefung 11 erzeugt, indem das Grundmaterial 9 zerspant wird. Gemäß dem gezeigten Ausführungsbeispiel erstreckt sich die Vertiefung 11 ausgehend von einer Oberfläche 12 des Grundmaterials 9 entlang der Vertiefungsrichtung 10 bis zu der ersten Tiefe T₁, wie in Fig. 2 dargestellt. Die erste Tiefe T₁ gibt den Abstand des Grunds der Vertiefung 11 entlang der Werkzeuglängsachse 2 zu der Oberfläche 12 des Grundmaterials 9 an. Die Vertiefungsrichtung 10 ist parallel zur Werkzeuglängsachse 2 orientiert. In einer Ebene senkrecht zur Vertiefungsrichtung 10 ist die Vertiefung 11 ringförmig ausgeführt.

Durch die zerspanende Bearbeitung des Grundmaterials 9 verschleißen die Schneiden 4 und werden stumpf. Das Werkzeug 1 wird, wie in Fig. 3 dargestellt, aus der Vertiefung entgegen der Vertiefungsrichtung 10 entnommen.

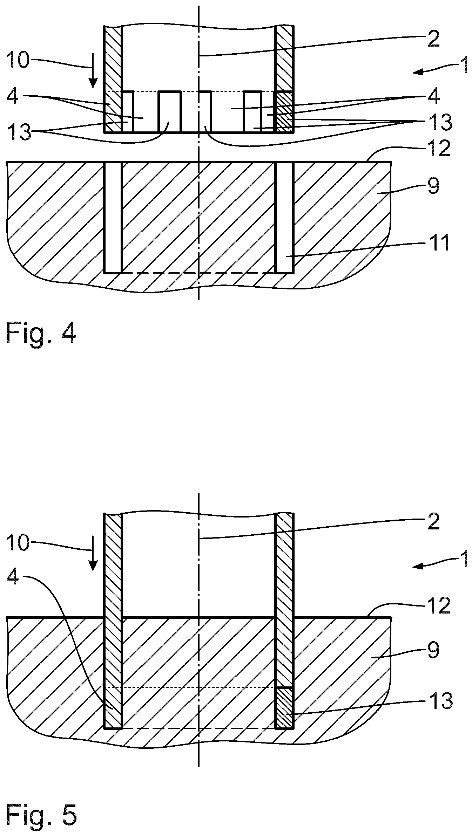

An dem Werkzeug 8 wird mindestens ein Formteil 13 angebracht. Gemäß dem gezeigten Ausführungsbeispiel werden mehrere, insbesondere acht, Formteile 13 verwendet, die jeweils in die Ausbrüche 5 zwischen den Schneiden 4 angeordnet werden. Dies ist in Fig. 4 dargestellt. Gemäß dem gezeigten Ausführungsbeispiel werden die Formteile 13 an dem Werkzeug 1 angeklebt. Die Formteile 13 sind an dem Werkzeug 1 fixiert, also definiert gehalten.

Das Formteil 13 ist als Zylinderschalensegment ausgeführt. Gemäß dem gezeigten Ausführungsbeispiel sind die Formteile 13 an der Bearbeitungsstirnfläche 3 bündig mit den Schneiden 4 ausgeführt. Es ist auch denkbar, dass die Formteile 13 an der Bearbeitungsstirnfläche 3 vorstehen oder zurückversetzt angeordnet sind.

Die Formteile 13 sind aus einem Schärfmaterial hergestellt, das gemäß dem gezeigten Ausführungsbeispiel Siliziumcarbid aufweist.

Das Werkzeug 1 mit den daran angebrachten Formteilen 13 wird wieder in die Vertiefung 11 eingeführt. Das ist in Fig. 5 dargestellt. Die Zerspanung mit dem Werkzeug 1 wird fortgesetzt. Durch die Werkzeugbewegung wird das Formteil 13 ausgebrochen und/oder zerspant. Durch den Kontakt der Schneiden 4 mit dem Schärfmaterial des Formteils 13 wird ein Schärfen, insbesondere ein selbsttätiges Nachschärfen der Schneiden 4 des Werkzeugs 1 in der Vertiefung 11 bewirkt. Das Werkzeug 1 kann unmittelbar und insbesondere ohne weitere Entnahme aus der Vertiefung 11 für die weitere Materialbearbeitung genutzt werden, um die Vertiefung 11 bis zu einer zweiten Tiefe T₂ fortzusetzen.

Wenn die Schneiden 4 des Werkzeugs 1 wieder stumpf sind, wird der selbsttätige Nachschärfschritt wiederholt, indem das Werkzeug 1 aus der Vertiefung 11 entnommen, mindestens ein Formteil 13 verwendet und die Fortsetzung der Bearbeitung mit dem Nachschärfen wiederholt wird. Das selbsttätige Nachschärfen ist beliebig oft wiederholbar.

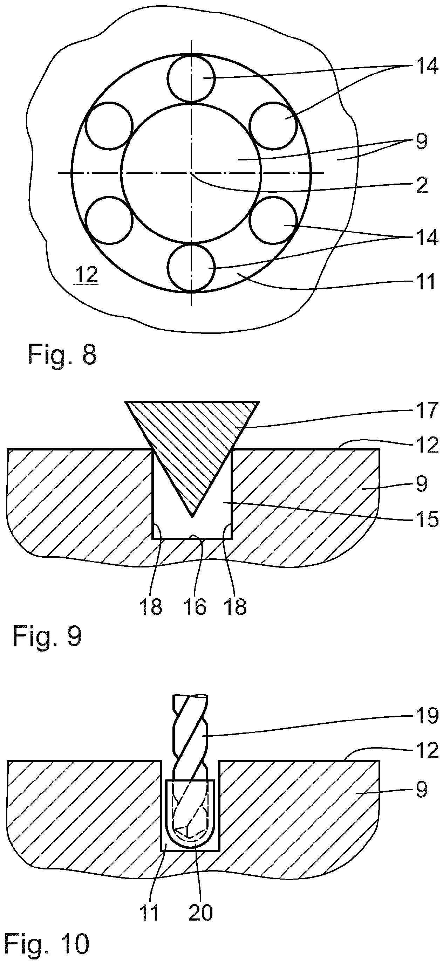

Im Folgenden werden anhand von Fig. 8 bis 10 weitere Ausführungsformen von Werkzeugen und Formteilen erläutert.

Fig. 8 zeigt eine Draufsicht auf die Vertiefung 11 gemäß Fig. 3. Anstelle der Formteile 13, die an dem Werkzeug 1 angebracht sind, können stäbchenförmige Formteile 14 entlang der Vertiefungsrichtung 10 in die Vertiefung 11 eingeführt werden. Vorteilhaft ist es, wenn die Länge der Formteile 14 kleiner ist als die erste Tiefe T₁. Gemäß dem gezeigten Ausführungsbeispiel weisen die Formteile 14 in einer Ebene senkrecht zur Formteillängsachse einen Kreisquerschnitt auf. Die Formteile 14 können auch einen unrunden, beispielweise polygonförmigen Querschnitt aufweisen.

Es ist auch denkbar, anstelle der stabförmigen Formteile 14 ein hohlzylindrisches, insbesondere ringförmiges Formteil in die Vertiefung 11 entlang der Vertiefungsrichtung 10 einzusetzen. Ein derartiges Formteil kann auch geteilt als Zylinderhalbschalen oder mehrfach geteilt ausgeführt sein.

Fig. 9 zeigt eine nutartige Vertiefung 15. Die Vertiefung 15 ist als Rechtecknut ausgeführt. In Abhängigkeit der Geometrie des Werkzeugs kann die Vertiefung 15 am Nutgrund 16 auch Rundungen aufweisen. Die Vertiefungsrichtung ist gemäß Fig. 9 im Wesentlichen senkrecht zur Zeichenebene orientiert. Die Vertiefung 15 wird beispielsweise durch ein Sägeblatt oder eine Trennscheibe erzeugt. Das Sägeblatt wird relativ zu dem Grundmaterial 9 entlang der Vertiefungsrichtung verlagert.

Zum Nachschärfen des Werkzeugs ist ein keilförmiges Formteil 17 vorgesehen, das an den Nutflanken 18 der Vertiefung 15 klemmend angeordnet ist. Das Formteil 17 ist in der Vertiefung 15 zuverlässig gehalten. Die Geometrie des Formteils 17, insbesondere der Öffnungswinkel des in der Vertiefung 15 angeordneten Keils, die Länge des Keils und der Überstand des Keils gegenüber der Oberfläche 12 der Vertiefung 15, ist veränderlich festlegbar. Gemäß dem gezeigten Ausführungsbeispiel ragt das Formteil 17 an der Oberfläche 12 über. Das Formteil 17 kann auch derart ausgewählt sein, dass es bündig mit der Oberfläche 12 abschließt oder gegenüber der Oberfläche 12 nach innen in die Vertiefung 15 versetzt ist.

Fig. 10 zeigt eine weitere Ausführungsform mit einem als Vollbohrer ausgeführten Werkzeug 19. Zum Nachschärfen des Werkzeugs 19 ist ein fingerhutförmiges Formteil 20 auf die Bohrerspitze aufgesetzt.

## Patentansprüche

1. Verfahren zum Schärfen eines Werkzeugs (1; 19) umfassend die Verfahrensschritte
- Bearbeiten einer Bearbeitungsoberfläche eines Grundmaterials (9) mit dem Werkzeug (1; 19),
- Erzeugen einer Vertiefung (11) in dem Grundmaterial (9) mit dem Werkzeug (1; 19) entlang einer Vertiefungsrichtung (10),
- Entnehmen des Werkzeugs (1; 19) aus der Vertiefung (11),
- Einsetzen mindestens eines Formteils (13; 20) aus einem Schärfmaterial in die Vertiefung (11),
- Wiedereinführen des Werkzeugs (1; 19) in die Vertiefung (11),
- Anordnen des mindestens einen Formteils (13; 20) an der Bearbeitungsoberfläche,
- Fortsetzen der Bearbeitung mit dem Werkzeug (1; 19),
- Schärfen des Werkzeugs (1; 19) durch Zerspanen des mindestens einen Formteils (13; 20) mit dem Werkzeug (1; 19),
**dadurch gekennzeichnet dass** das mindestens eine Formteil (13; 20) vor dem Einsetzen in die Vertiefung (11) an dem Werkzeug angebracht wird.

2. Verfahren gemäß Anspruch 1, **dadurch gekennzeichnet, dass** die Vertiefungsrichtung (10) geradlinig ausgeführt ist.

3. Verfahren gemäß Anspruch 1 oder 2, **dadurch gekennzeichnet, dass** eine senkrecht zur Vertiefungsrichtung (10) orientierte Querschnittsfläche der Vertiefung (11) kreisförmig, ringförmig oder nutförmige ausgeführt ist.

4. Verfahren gemäß einem der Ansprüche 1 bis 3, **dadurch gekennzeichnet, dass** das Werkzeug (1; 19) mindestens eine Schneide (4) aufweist, die insbesondere diamantbesetzt ist.

5. Verfahren gemäß einem der Ansprüche 1 bis 4, **dadurch gekennzeichnet, dass** das mindestens eine Formteil (13; 20) vor dem Einsetzen in die Vertiefung (11) an dem Werkzeug (1; 19) befestigt wird.

6. Kombination aus mindestens einem Formteil (13; 20) und einem Werkzeug (1) umfassend mehrere Schneiden (4), wobei das Formteil (13; 20) ein Schärf-Formteil zum Schärfen der Schneiden (4) ist und ein Schärfmaterial, insbesondere Siliziumkarbid (SiC), Korund, Zirkonkorund, Bornitrid und/oder Diamant, aufweist, **dadurch gekennzeichnet dass** das Formteil (13; 20) an dem Werkzeug (1) angebracht und für die Durchführung eines Verfahrens gemäß einem der vorstehenden Ansprüche geeignet ist.

7. Werkzeug gemäß Anspruch 6, **dadurch gekennzeichnet, dass** das Formteil (13) als Hohlzylinder oder als Zylinderschalensegment ausgeführt ist.

8. Werkzeug gemäß Anspruch 6, **dadurch gekennzeichnet, dass** das Formteil (20) entlang einer Formteillängsachse kegelförmig, kegelstumpfförmig, keilförmig, plattenförmig, plättchenförmig, stabförmig oder stäbchenförmig ausgeführt ist.

## Claims

1. Method for sharpening a tool (1; 19) comprising the following method steps:
- machining a machining surface of a base material (9) with the tool (1; 19),
- creating a depression (11) in the base material (9) with the tool (1; 19) along a depression direction (10),
- removing the tool (1; 19) from the depression (11),
- inserting at least one shaped part (13; 20) consisting of a sharpening material into the depression (11),
- re-introducing the tool (1; 19) into the depression (11),
- arranging the at least one shaped part (13; 20) on the machining surface,
- continuing the machining with the tool (1; 19),
- sharpening the tool (1; 19) by machining the at least one shaped part (13; 20) with the tool (1; 19),
**characterized in that**, prior to insertion into the depression (11), the at least one shaped part (13; 20) is mounted on the tool.

2. Method according to Claim 1, **characterized in that** the depression direction (10) is configured to be rectilinear.

3. Method according to Claim 1 or 2, **characterized in that** a cross-sectional area, which is oriented perpendicular to the depression direction (10), of the depression (11) is configured to be circular, annular or groove-shaped.

4. Method according to one of Claims 1 to 3, **characterized in that** the tool (1; 19) has at least one cutter (4) which is in particular diamond-studded.

5. Method according to one of Claims 1 to 4, **characterized in that,** prior to insertion into the depression (11), the at least one shaped part (13; 20) is fastened to the tool (1; 19).

6. Combination of at least one shaped part (13; 20) and a tool (1) comprising a plurality of cutters (4),
wherein
the shaped part (13; 20) is a sharpening shaped part for sharpening the cutters (4) and contains a sharpening material, in particular silicon carbide (SiC), corundum, zirconium corundum, boron nitride and/or diamond, **characterized in that** the shaped part (13; 20) is mounted on the tool (1) and suitable for carrying out a method according to one of the preceding claims.

7. Tool according to Claim 6, **characterized in that** the shaped part (13) is configured as a hollow cylinder or as a cylinder shell segment.

8. Tool according to Claim 6, **characterized in that** the shaped part (20) is configured, along a shaped part longitudinal axis, to be conical, frustoconical, wedge-shaped, plate-shaped, platelet-shaped, rod-shaped or rodlet-shaped.

## Revendications

1. Procédé d'affûtage d'un outil (1 ; 19) comprenant les étapes de procédé suivantes
- traitement d'une surface de traitement d'un matériau de base (9) à l'aide de l'outil (1 ; 19),
- création d'un évidement (11) dans le matériau de base (9) à l'aide de l'outil (1 ; 19) suivant une direction d'évidement (10),
- retrait de l'outil (1 ; 19) de l'évidement (11),
- insertion d'au moins une pièce moulée (13 ; 20) constituée d'un matériau d'affûtage dans l'évidement (11),
- réinsertion de l'outil (1 ; 19) dans l'évidement (11),
- disposition d'au moins une pièce moulée (13 ; 20) au niveau de la surface de traitement,
- poursuite du traitement à l'aide de l'outil (1 ; 19),
- affûtage de l'outil (1 ; 19) par usinage par coupe de l'au moins une pièce moulée (13 ; 20) à l'aide de l'outil (1 ; 19),
**caractérisé en ce que** l'au moins une pièce moulée (13 ; 20) est fixée à l'outil avant d'être insérée dans l'évidement (11).

2. Procédé selon la revendication 1, **caractérisé en ce que** la direction d'évidement (10) est rectiligne.

3. Procédé selon la revendication 1 ou 2, **caractérisé en ce qu'**une surface de section transversale de l'évidement (11) orientée perpendiculairement à la direction d'évidement (10) est circulaire, annulaire ou en forme de rainure.

4. Procédé selon l'une des revendications 1 à 3, **caractérisé en ce que** l'outil (1 ; 19) présente au moins une arête coupante (4), qui est en particulier incrustée de diamants.

5. Procédé selon l'une des revendications 1 à 4, **caractérisé en ce que** l'au moins une pièce moulée (13 ; 20) est fixée à l'outil (1 ; 19) avant d'être insérée dans l'évidement (11).

6. Combinaison d'au moins une pièce moulée (13 ; 20) et d'un outil (1) comprenant plusieurs arêtes coupantes (4), dans laquelle la pièce moulée (13 ; 20) est une pièce moulée d'affûtage pour l'affûtage des arêtes coupantes (4), et comporte un matériau d'affûtage, en particulier du carbure de silicium (SiC), du corindon, du corindon de zirconium, du nitrure de bore et/ou du diamant, **caractérisée en ce que** la pièce moulée (13 ; 20) est fixée à l'outil (1) et est appropriée pour la mise en œuvre d'un procédé selon l'une des revendications précédentes.

7. Outil selon la revendication 6, **caractérisé en ce que** la pièce moulée (13) est réalisée sous la forme d'un cylindre creux ou d'un segment d'enveloppe cylindrique.

8. Outil selon la revendication 6, **caractérisé en ce que** la pièce moulée (20) est conique, tronconique, cunéiforme, en forme de plaque, en forme de plaquette, en forme de tige ou en forme de bâtonnet le long d'un axe longitudinal de la pièce moulée.
